# EUROPEAN PATENT APPLICATION

(11) **EP 4 141 888 A1**
(43) Date of publication of application: **01.03.2023**
(21) Application number: 20968102.2
(22) Date of filing: 29.12.2020
(51) Int. Cl.: G21C 3/04

(54) **FUEL ROD FOR A WATER-COOLED WATER-MODERATED NUCLEAR REACTOR**

(71) Applicant: Joint-Stock Company "TVEL", Moscow 115409 (RU)
(72) Inventor: NOVIKOV, Vladimir Vladimirovich, Moscow 123458 (RU); KUZNETSOV, Vladimir Ivanovich, Moscow 123098 (RU); SERGIENKO, Ivan Romanovich, Novomoskovsk 301664 (RU); RYKUNOV, Dmitriy Vladimirovich, Moscow 109386 (RU); GIZATULLIN, Timur Tagirovich, Kuluevo 456894 (RU)
(74) Representative: Yalçiner Patent and Consulting Ltd.
(86) International application number: PCT/RU2020/000769
(87) International publication number: WO 2022/146160

(57) **Abstract**

The invention relates to nuclear engineering, and more particularly to fuel rods for a VVER-1200 reactor. A fuel rod comprises a cylindrical cladding having a length of 4000±5 mm and being made of E110 ultra-high purity zirconium alloy, upper and lower plugs welded to said cladding, a fuel column having a mass of from 1600 to 1800 g and being comprised of fuel pellets, and a retaining spring disposed in the cladding and being configured in the form of a cylindrical spring. The end of the lower plug is in the form of a blind collet having an outer cylindrical surface, an inner cylindrical surface and a single longitudinal slot, wherein the outer surface of the free end of the collet is configured with a collar. The fuel pellets are made of REMIX fuel based on reprocessed uranium and plutonium with added enriched natural uranium. The technical result is that of increasing energy efficiency and fuel burnup while maintaining the reliability and operating safety of a VVER fuel rod, increasing the reliability and simplifying the process of assembling a fresh fuel assembly, providing for a closed plutonium cycle, and reducing consumption of natural uranium.

## Description

The invention is referred to nuclear engineering and related to nuclear REMIX fuel with improved design of the fuel rods into the upgraded fuel assemblies (FAs) that constitute the core in a water-cooled vessel-type nuclear reactor of the VVER-1200 type with increased capacity.

The prospects for development of nuclear power engineering are considerably determined by solution of the problem related to enhancement of power yield and maintenance of the existing safety level at nuclear power plants (NPPs).

The problem of the cost efficiency level increase at the operating NPPs with VVER reactors (water-cooled water-moderated nuclear reactors) has various solutions. However, at present it is usually solved through minimum modifications of the structural core components. This approach enables to utilize the available resources more efficiently without recourse to any significant adjustment of the processes in manufacturing of the structural components.

At present, fuel rods are used in the nuclear reactors of the VVER type. A fuel rod has a fuel column consisting of individual cylindrical pellets located in the cladding which is a load-bearing structural component (see A.G. Samoilov, Fuel Rods for Nuclear Reactors. Moscow, Energoatomizdat, 1985, p. 99 - 107). The diameter of fuel rods is assumed to be as small as possible in order to enlarge the heat exchange surface and to reduce thermal stresses caused by temperature differential, and in the real designs of pressurized water reactors it varies from 7.35·10⁻³ m to 15˙10⁻³ m (see G. N. Ushakov, Pressure Tubes and Fuel Rods of Nuclear Reactors. Moscow, Energoizdat, 1981, p. 32-36). The design of fuel rods, FAs and the core itself for the VVER reactors must ensure mechanical stability and strength of fuel rods, particularly under the emergency conditions with high temperatures.

A fuel rod of a water-cooled water-moderated nuclear reactor containing a leak-tight cylindrical cladding and nuclear fuel in the form of cylindrical pellets arranged in a column along the cladding length is known (Russian patent No. 2244347, IPC G21C 3/00, published on 10.01.2005). The outer diameter of the fuel rod cladding is selected to be 7.00·10⁻³m to 8.79·10⁻³m, and the fuel column has the diameter of 5.82·10⁻³ m to 7.32·10-3 m and the weight of 0.93 kg to 1.52 kg. Fuel pellets may be solid, or may have central holes with the diameter of 1.07·10⁻³m to 1.45·10⁻³m. Pressed and sintered uranium dioxide and/or plutonium dioxide is used as the material for fuel pellets; thorium oxide, uranium carbides or their mixtures may be also used. The weight of uranium in the fuel rods is 0.82 - 1.34 kg. The ratio between the fuel column length and the fuel rod length is 0.9145 to 0.9483.

The drawback of the known fuel rod lies in the fact that the outer diameter of the fuel rod cladding varies from 7.00·10⁻³m to 8.79·10⁻³ m resulting in significant adjustment of the manufacturing technology for all fuel rod components which causes complication of the manufacturing technology in comparison with the existing one for the outer diameter of 9.1 mm. The fuel weight of 0.82 - 1.34 kg is also a drawback, while the fuel weight in the fuel rod with REMIX fuel is 1.6 to 1.8 kg enabling to increase energy efficiency of the fuel cycle.

The closest analog taken as the prototype is a fuel rod of the core of water-cooled water-moderated nuclear reactors of the VVER-1000 type (V.D. Shmelev, Yu.G. Dragunov, V.P. Denisov, I.N. Vasilchenko. Cores of VVERs for Nuclear Power Plants. Moscow: ICC Akademkniga, 2004, p. 106) consisting of the following parts: the upper end plug, the cladding, the lower end plug, the fuel column consisting of uranium dioxide pellets and the retainer. The cladding and end plugs are made of E110 alloy. The inner volume of the fuel rod is filled with helium under the pressure of (2.00±0.25) MPa to prevent any crumpling of the cladding during operation. The fuel rod is sealed by welding. Compensatory space is provided in the upper section of the fuel rod to reduce the pressure of gaseous fission products under the cladding emitted during operation. The fuel column is fixed with the use of the retainer to protect it against the impact of any transportation and handling loads. The upper end plug is configured to attach a gripping device for the fuel rod removal/installation during the FA assembling. The lower end plug is installed into the bottom grid and fastened by splinting.

Drawbacks lie in the fact that the length of the fuel rod and the fuel column in the fuel rods for the VVER-1000 reactor is smaller than the length of the fuel rods for the VVER-1200 reactor, thus the aggregate fuel loading in the core is also less which results in reduced power yield of the water-cooled water-moderated power reactor VVER-1000 as compared with the VVER-1200. The fuel rods for the VVER-1200 reactor enable to use the claddings with the size of 9.06 to 9.14 mm (outer diameter) and 7.93 to 7.99 mm (inner diameter) alongside with the cladding of 9.06 to 9.14 mm (outer diameter) and 7.73 to 7.79 mm (inner diameter), thus also increasing the fuel loading. Use of the E110 alloy containing more hafnium than the E110 ultra-high purity alloy as the cladding material results in increased absorption of neutrons by the fuel rod cladding which also causes reduction of the reactor power yield. Use of the pellets with central holes reducing the fuel loading is also a drawback.

Fastening the lower end plug to the support grid by splinting results in more complicated and labor-intensive process for assembly and disassembly of fuel rods within the FA. The main drawback is use of uranium dioxide as fuel while reprocessed spent nuclear fuel based on uranium and plutonium dioxide is used in the fuel rods with REMIX fuel enabling to reduce the amount of spent nuclear fuel (SNF) and natural uranium consumption.

The objective of the invention is to develop and create a new fuel rod for the water-cooled water-moderated nuclear reactor VVER-1200 with increased energy efficiency and maintenance of the existing safety level as well as to simplify the fresh (non-irradiated) FA assembly process due to optimization of the fuel rod design with the use of the available process equipment and to provide for a closed plutonium cycle in thermal reactors and reducing consumption of natural uranium due to the use of the nuclear REMIX fuel.

The technical result includes increase of energy efficiency and fuel burnup while maintaining the reliability and operating safety of a water-cooled water-moderated nuclear reactor fuel rod as well as enhancement of reliability and simplification of the fresh FA assembling process, assurance of the closed plutonium cycle and reducing consumption of natural uranium.

The essence of the invention is to provide the fuel rod of a water-cooled water-moderated nuclear reactor comprising the cladding with the length of 4000±5 mm made of E110 ultra-high purity zirconium alloy in the form of a hollow cylinder, the upper and lower end plugs welded concentrically to the top and bottom ends of the cladding, respectively, using an inert-gas shielded butt resistance welding, with the possibility to ensure sealing of the fuel rod and its filling with an inert gas, the fuel column having a mass of from 1600 to 1800 g arranged concentrically in the cladding and comprised of fuel pellets made of REMIX fuel based on reprocessed uranium and plutonium with added enriched natural uranium, with the plutonium dioxide content of 1 to 3 % wt., the balance being uranium dioxide, equivalent enrichment of the fuel - 1 to 5% of uranium-235, the retaining spring located concentrically in the cladding and arranged in the form of a cylindrical spring made of stainless steel configured to press the fuel column against the lower end plug in the axial direction, comprising the compensatory group coils configured to ensure the axial force for pressing the fuel column, and the fixing group coils configured to prevent any axial displacement of the retaining spring inside the cladding; wherein the lower end plug end, which is opposite to the end welded to the cladding, is arranged as a blind collet with the external cylindrical surface, internal cylindrical surface, and a longitudinal slot; wherein a collar is arranged on the outer surface of the free end of the collet. The outer diameter of the cladding may be from 9.06 to 9.14 mm, and the inner diameter is from 7.73 to 7.79 or from 7.93 to 7.99 mm. The fuel pellets may be made with a central hole or with no central hole. A coil of the retaining spring being in contact with the top fuel pellet can be pressed down to ensure contact, and polished to form a contact plane between the coil and the fuel pellet.

The above-mentioned set of features is new, unknown in the prior art and achieves the stated objective as:
- increased length of the fuel column and the fuel rod ensures increase of the aggregate fuel loading in the core. The justifying calculations demonstrated that the operability and reliability parameters identical to the fuel rods of the VVER-1000 reactor were ensured with relatively greater fuel loading, and the service life and fuel burnup were higher for the same parameters of the VVER-1200 reactor fuel rods;
- use of the fuel column consisting of fuel pellets made of REMIX fuel based on reprocessed uranium and plutonium with addition of enriched natural uranium enables to close the cycle for plutonium in thermal reactors and thus to suspend the process of its accumulation or even to reduce its stock; wherein it will also enable to reduce natural uranium consumption by 20-25% and to utilize the fuel potential of SNF more efficiently;
- use of high-purity E110 alloy as the cladding material enables to reduce neutron absorption by the cladding due to reduced hafnium content, which results in increased power yield;
- use of the collet-type lower end plug in the fuel rod design enables to provide for assembly of fuel rods into a bundle and their reliable fixation without any additional tools and fasteners (splinting, etc.).

The invention is illustrated with the following graphical materials.
Fig. 1 shows a longitudinal section variant of the claimed fuel rod for the VVER-1200 reactor.
Fig. 2 shows a magnified image of the lower end plug.
Fig. 3 shows the lower end plug section.

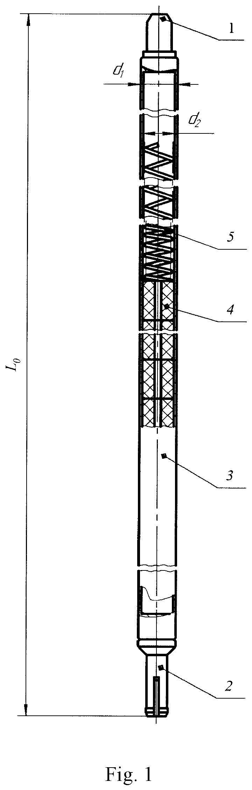

The fuel rod of a water-cooled water-moderated nuclear reactor (Fig. 1) is comprised of the following structural components: the cladding (3) in the form of a hollow cylinder, the upper (1) and lower (2) end plugs, the fuel column (4) and the retaining spring (5).

The cladding (3) is made of E110 ultra-high purity zirconium alloy; the cladding length L₀ is 4000±5 mm; wherein the outer diameter of the cladding di is from 9.06 to 9.14 mm, and the inner diameter of the cladding d₂ is from 7.73 to 7.79 mm. A thinned cladding may be also used; in this case the outer diameter of the cladding is equal to from 9.06 to 9.14 mm, and the inner diameter of the cladding is from 7.93 to 7.99 mm.

The upper (1) and lower (2) end plugs are welded concentrically to the top and bottom ends of the cladding (3), respectively, using an inert-gas shielded butt resistance welding. The upper (1) and lower (2) end plugs provide a leak-tight cavity inside the fuel rod. In this case, the fuel rod is filled with the inert gas which is supplied under pressure into the fuel rod during welding of the upper end plug (1) to the cladding (3) to ensure corrosion resistance, the fuel rod strength, and thermal conductivity.

The fuel column (4) is arranged concentrically in the cladding (3) and is assembled from fuel pellets; in this case the fuel pellets may be made with a central hole or solid without any central hole.

The fuel pellets are made of REMIX fuel (REMIX means regenerated mixture) based on reprocessed uranium and plutonium with added enriched natural uranium.

REMIX fuel is produced from non-separated mixture of reprocessed uranium and plutonium generated during SNF processing. A small quantity of enriched uranium is added to the extracted mixture. Thus, not only plutonium contained in SNF, but also the unburnt uranium-235 is reused. The mass fraction of plutonium dioxide may vary from 1 to 3%; the mass fraction of uranium dioxide is the balance (97 to 99% respectively); equivalent enrichment of the fuel is 1 to 5% of uranium-235.

The fuel column (4) has a mass of from 1600 to 1800 g. Increased length and mass of the fuel column (4) provide for increased thermal power of the reactor up to 3300 MW.

The retaining spring (5) is located concentrically in the cladding (3) and arranged in the form of a cylindrical spring made of stainless steel configured to press the fuel column (4) against the lower end plug (2) in an axial direction. The retaining spring (5) is comprised of compensatory group coils arranged with the possibility to provide the axial force for pressing the fuel column (4), and the fixing group coils configured to prevent any axial displacement of the retaining spring (5) inside the cladding (3).

In this case the coil of the retaining spring (5) being in contact with the top fuel pellet may be pressed down to ensure contact, and polished in order to form a contact plane between the coil and the fuel pellet.

The bottom fuel pellet of the fuel column (4) touches the lower end plug (2) with its bottom end, and the top fuel pellet of the fuel column (4) is in contact with the retaining spring (5).

The end of the lower end plug (2), which is opposite to the end welded to the cladding (3), is configured as a blind collet with the outer cylindrical surface, an internal cylindrical surface, and the longitudinal slot (7).

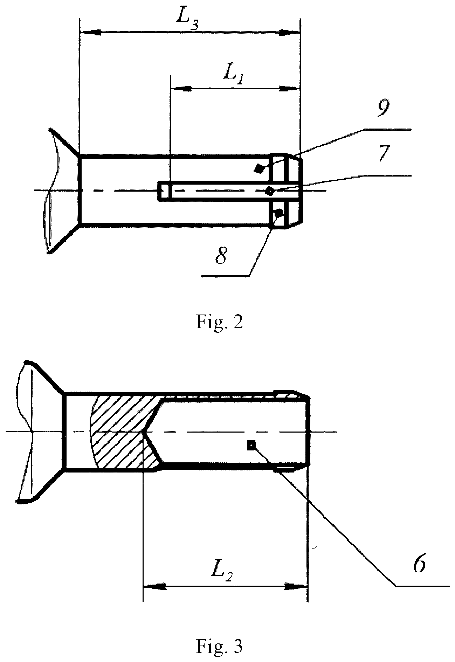

The slot (7) of the lower end plug (2) (see Fig. 2) has the length L₁ of 9 to 13 mm and a cylindrical groove (see Fig. 3) with the length L₂ of 9 to 13 mm. The collet part (9) of the lower end plug (2) has the length L₃ of 15 to 16 mm (see Fig. 2). In this case a collar (8) with the truncated conical section is arranged on the outer surface of the free end of the collet.

The fuel rod of a water-cooled water-moderated nuclear reactor is operated in the following way.

During manufacture of the fuel rod the retaining spring (5) presses the fuel column (4) against the lower end plug (2) in the axial direction with a force ensuring maintenance of the fuel column (4) integrity. The compensatory group coils of the retaining spring (5) provide the axial force for pressing of the fuel column (4). The fixing group coils of the retaining spring (5) provide for retaining of the retaining spring (5) in order to prevent any axial displacement inside the cladding (3). Holding the retaining spring (5) is assured by fastening in the cladding (3) through force fitting to the internal surface of the cladding (3).

Fuel pellets made of REMIX fuel based on reprocessed uranium and plutonium with added enriched natural uranium are placed into the cladding (3) made of the E110 ultra-high purity alloy. The mass fraction of plutonium dioxide is selected within the range of 1 to 3%; the mass fraction of uranium dioxide is the balance; equivalent enrichment of the fuel is 1 to 5% of uranium-235. In this case the fuel column (4) mass is selected within the range of 1600 to 1800 g, and such increased aggregate fuel loading in the core provides for enhanced energy efficiency and fuel burnup. Selection of REMIX fuel based on reprocessed uranium and plutonium with addition of enriched natural uranium provides the closed cycle for plutonium and reduction of natural uranium consumption.

The upper (1) and lower (2) end plugs are welded to the cladding (3) by inert gas shielded butt resistance welding, allowing to create a leak-tight cavity inside the fuel rod. The pressurized inert gas is supplied into the fuel rod during welding of the upper end plug (1) to the cladding (3).

The fuel rods formed with the use of the method described above are assembled into fuel assemblies loaded into the nuclear reactor core.

The lower end plug (2) of the fuel rod is fixed in the FA support grid during the FA assembly due to resilience of the collet part (9) with the slot (7). In the process of assembling the fuel rod into the FA, the slot (7) is compressed, and the outer diameter of the collar (8) is reduced to the value corresponding to the inner diameter of the FA grid with formation of the solid circular collar in the compressed position of the collet; then the collet part (9) of the lower end plug (2) is pushed into the FA grid all the way; the slot (7) is released into its original state, and the initial outer diameter of the collar (8) is restored. The collar (8) thrusts against the FA grid thus preventing any axial displacement of the lower end plug (2) and the fuel rod.

The lower end plug (2) with the design described above allows simplification of the fresh FA assembly process.

Thus the invention provides:
- the closed cycle for plutonium and reduction of natural uranium consumption due to use of the fuel column consisting of fuel pellets made of REMIX fuel based on reprocessed uranium and plutonium with added enriched natural uranium.
- enhanced energy efficiency and fuel burnup while maintaining reliability and safe operation of the fuel rod of the water-cooled water-moderated nuclear reactor due to increased aggregate fuel loading in the core as well as due to use of the E110 ultra-high purity alloy as the cladding material;
- increased reliability and simplification of the fresh FA assembling process due to the use of the collet-type lower end plug in the fuel rod design, and also due to the use of the butt resistance welding.

## Claims

1. A fuel rod of a water-cooled water-moderated nuclear reactor, comprising:
a cladding having a length of 4000±5 mm and being made of E110 ultra-high purity zirconium alloy in the form of a hollow cylinder,
an upper plug and a lower plug welded concentrically to the top and bottom ends of the cladding respectively by inert gas shielded butt resistance welding with the possibility to ensure the fuel rod sealing and filling with an inert gas,
a fuel column having a mass of from 1600 to 1800 g arranged concentrically in the cladding and assembled from fuel pellets made of REMIX fuel based on reprocessed uranium and plutonium with added enriched natural uranium, with the plutonium dioxide content from 1 to 3% wt., the balance being uranium dioxide, equivalent enrichment of the fuel from 1 to 5% of uranium-235,
a retaining spring disposed concentrically in the cladding and being configured in the form of a cylindrical spring made of stainless steel capable to press the fuel column against the lower plug in the axial direction, the retaining spring comprised of compensatory group coils configured to provide an axial force for pressing the fuel column, and of fixing group coils configured to prevent any axial displacement of the retaining spring within the cladding,
wherein the end of the lower plug, which is opposite to the end welded to the cladding, is in the form of a blind collet having an outer cylindrical surface, an internal cylindrical surface, and a single longitudinal slot; wherein the outer surface of the free end of the collet is configured with a collar.

2. The fuel rod according to claim 1, wherein the outer diameter of the cladding is from 9.06 to 9.14 mm, and the inner diameter is from 7.73 to 7.79 mm.

3. The fuel rod according to claim 1, wherein the outer diameter of the cladding is from 9.06 to 9.14 mm, and the inner diameter is from 7.93 to 7.99 mm.

4. The fuel rod according to claim 1, wherein the fuel pellets have a central hole.

5. The fuel rod according to claim 1, wherein the fuel pellets are made without any central hole.

6. The fuel rod according to claim 1, wherein a coil of the retaining spring being in contact with the top fuel pellet is pressed down to ensure contact and polished to form a contact plane between the coil and the fuel pellet.
